Europäisches Patentamt

European Patent Office

Office européen des brevets

(19)

(11) Veröffentlichungsnummer: **0 238 699**
**B1**

(12) ## EUROPÄISCHE PATENTSCHRIFT

(45) Veröffentlichungstag der Patentschrift:
07.06.89

(51) Int. Cl.⁴: **G02B 7/11**

(21) Anmeldenummer: 86104248.9

(22) Anmeldetag: 27.03.86

(54) Verfahren zur Fokussierung eines optischen Abbildungssystems sowie Einrichtung zur Durchführung des Verfahrens.

(43) Veröffentlichungstag der Anmeldung:
30.09.87 Patentblatt 87/40

(45) Bekanntmachung des Hinweises auf die Patenterteilung:
07.06.89 Patentblatt 89/23

(84) Benannte Vertragsstaaten:
AT FR GB

(56) Entgegenhaltungen:
DE-A- 2 514 230
DE-A- 2 551 070
DE-A- 2 828 831
DE-A- 3 340 647
DE-C- 3 510 066
FR-A- 2 386 832
US-A- 3 896 304
US-A- 4 350 884

(73) Patentinhaber: **Boseck, Siegfried, Prof.Dr., Heideweg 40, D-2804 Lilienthal-Klostermoor(DE)**

(72) Erfinder: **Ilgen, Edgar, Dipl.-Phys., Moislinger Alle 108, D-2400 Lübeck(DE)**
Erfinder: **Lüllmann, Johannes, Dipl.-Phys., Waller Strasse 24, D-2800 Bremen 1(DE)**
Erfinder: **Harms, Harry, Dr., Johanniter Weg 30, D-8700 Würzburg 30(DE)**
Erfinder: **Will, Erich, Sonnenweg 1, D-6330 Wetzlar 21/OT Nauborn(DE)**
Erfinder: **Boseck, Siegfried, Prof. Dr., Heideweg 40, D-2804 Lilienthal-Klostermoor(DE)**
Erfinder: **Schmidbauer, Georg, Dipl.-Ing., Westerwaldstrasse 19, D-6330 Wetzlar 21/OT Nauborn(DE)**
Erfinder: **Kreitlow, Horst, Dr., Hollige 42, D-3030 Walsrode 23(DE)**

(74) Vertreter: **Eisenführ & Speiser, Martinistrasse 24, D-2800 Bremen 1(DE)**

ACTORUM AG

## Beschreibung

Die Erfindung betrifft ein Verfahren zur Fokussierung eines optischen Abbildungssystems nach dem Oberbegriff des Anspruches 1. Bei den zum Stand der Technik gehörenden Verfahren (DE-AS 2 828 831, DE-AS 2 838 121 und DE-A 3 340 647) wird die Summe der Helligkeitsdifferenzen zwischen benachbarten Bildpunkten für sämtliche oder einen Teil der Bildpunkte des Objektes gebildet, unabhängig davon, ob die Helligkeitsdifferenzen einen positiven oder negativen Wert aufweisen. Da bei diesem Verfahren aus statistischen Gründen der Summenwert sehr klein, praktisch gleich Null, wird, bildet man die Summe über die Beträge der Helligkeitsdifferenzen, d.h. negative Summenwerte werden so behandelt als seien sie positiv. Da bei diesem Verfahren eine große Anzahl von Daten zu bewerten ist, was erhebliche Rechenzeiten der Bewertungsalgorithmen erfordert, dauert die Selbstfokussierung, beispielsweise eines Mikroskopes, in der praktischen Anwendung zu lange. Verwendet man für die Auswertung einfachere mathematische Verfahren, dann sind diese zumeist wenig treffsicher.

Aufgabe der Erfindung ist es, den automatischen Fokussierungsvorgang zu beschleunigen.

Im Zuge eines Forschungs- und Entwicklungsauftrages des Bundesministeriums für Forschung und Technologie wurde diese Aufgabe durch das Verfahren des Anspruches 1 gelöst.

Dadurch, daß jetzt gemäß der Erfindung nur die Intensitätsunterschiede zwischen benachbarten Bildpunkten für die Summenbildung herangezogen werden, welche einen positiven Wert ergeben, und die anderen einen negativen Wert ergebenden Differenzen unberücksichtigt bleiben, wird die Zahl der zu addierenden Summanden wieder geringer, wodurch sich die Rechenzeit verkürzt.

Mathematisch ausgedrückt heißt dies, es wird die Summe gebildet:

$$S = \sum_{y=1}^{n} \sum_{x=2}^{m-1} k_{x,y} * H_{x,y}$$

$$\text{mit } H_{x,y} = 2 I_{x,y} - I_{x-1,y} - I_{x+1,y} \text{ und}$$

$$k_{x,y} = \begin{cases} 0, & H_{x,y} \leq 0 \\ 1, & H_{x,y} > 0 \end{cases}$$

Hierin bedeuten $k_{x,y}$ den Bewertungsfaktor, y die Spaltennummer für die Pixel in der Abbildungsebene, x die Zeilennummer, $I_{x,y}$ den Helligkeitswert im Bildpunkt x,y, n die Anzahl der ausgewerteten Spalten, m die Anzahl der ausgewerteten Bildpunkte einer Zeile.

Ein optisches System gilt dann als fokussiert, wenn sein Übertragungsverhalten hinsichtlich hoher Ortsfrequenzen optimiert ist. Die im Bild auftretenden Intensitätsgradienten stellen ein selektives Kriterium zur Detektion von hohen Ortsfrequenzen dar. $H_{x,y}$ stellt die diskrete Variante der zweifach abgeleiteten Intensitätsverteilungsfunktion dar.

Da $H_{x,y}$ vorzeichenbehaftet ist, würden sich bei einer großen Zahl von Bildpunkten aus statistischen Gründen bei der Summation über sämtliche $H_{x,y}$ nur geringfügig um Null schwankende Ergebnisse ergeben, aus denen sich kein Fokuskriterium ableiten läßt. Die negativen Beiträge zur Summe werden jedoch durch den Faktor $k_{x,y}$ unterdrückt, wodurch man zu brauchbaren Summenwerten kommt.

In der Regel wird man die Bildbewertung anhand der digitalisierten Bilddaten durchführen, da eine analoge Verarbeitung zwar schneller, jedoch deutlich ungenauer ist. Vor allen Dingen lassen die schwer zu kompensierende Temperaturdrift der Bauteile, Alterungseinflüsse und die hohe Empfindlichkeit gegen Störungen von außen den Aufwand bei analogen Bewertungselektroniken schnell überproportional ansteigen.

Weitere Einzelheiten der Erfindung können den Unteransprüchen sowie der Beschreibung von Ausführungsbeispielen entnommen werden.

Auf der Zeichnung sind Ausführungsbeispiele der Erfindung dargestellt, und zwar zeigen:

Fig. 1 die schematische Darstellung eines ersten Ausführungsbeispieles;
Fig. 2 ein geändertes Ausführungsbeispiel.

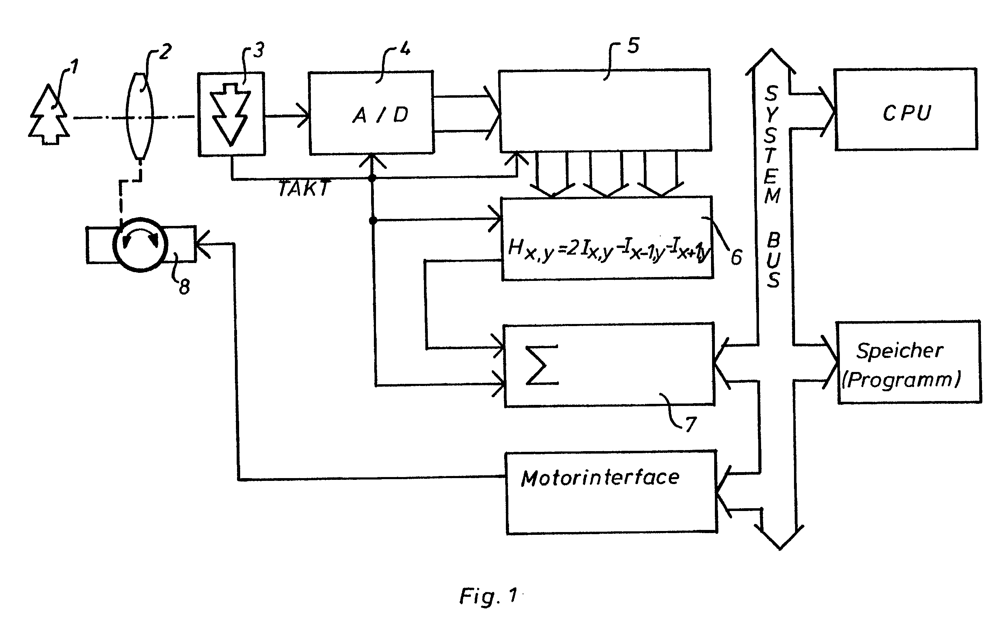

Fig. 1 zeigt den Aufbau eines Autofokussystems unter Verwendung des oben beschriebenen Bewertungsverfahrens.

Das Objekt 1 wird durch ein optisches Abbildungssystems 2 auf einen Sensor 3 abgebildet. Die Bilddaten werden in einem Analogdigitalwandler (A/D-Wandler) 4 digitalisiert. Die Daten werden anschließend in einen Speicher 5 übernommen, und der Wert $H_{x,y}$ wird in der Einheit 6 berechnet. Das Ergebnis wird in einem Summenspeicher 7 addiert, wenn $H_{x,y}$ positiv ist.

Zur automatischen Fokussierung wird das optische System 2 in engen Schritten in seinem Abstand vom Objekt 1 verstellt, beispielsweise mit Hilfe eines Schrittmotors 8. Nach jeder Verstellung wird die obengenannte Summe gebildet und im Speicher 7 abgelagert. Nach Durchlaufen des Fokusbereiches hat man dann nur diejenige Einstellung auszusuchen, bei der die zugehörige Summe im Speicher 7 ein Maximum ist. Die Summenbildung für jede Fokuseinstellung kann hard- oder softwaremäßig durchgeführt werden, und ein Mikrocomputer stellt selbsttätig den Schrittmotor vor und zurück, bis die Scharfeinstellung erfolgt ist.

Gegenüber den zum Stand der Technik gehörenden Verfahren, die bei negativen $H_{x,y}$ eine Betragsbildung durchführen, um auch bei diesen Werten einen positiven Beitrag zur Summe zu erhalten, hat das oben beschriebene Verfahren den Vorteil, daß bei guten Bewertungseigenschaften durch den Wegfall der Betragsbildung ein Geschwindigkeitsgewinn von ca. 10% zu erzielen ist.

Ein weiterer, bis zu 40%-iger Geschwindigkeitsgewinn läßt sich erzielen, wenn der eigentlichen Bewertungselektronik eine Vorverarbeitungselektronik vorgeschaltet ist, die die zu bewertenden Eingangsdaten nur dann an die Bewertungselektronik weitergibt, wenn sie einen Beitrag zur Summe liefern werden.

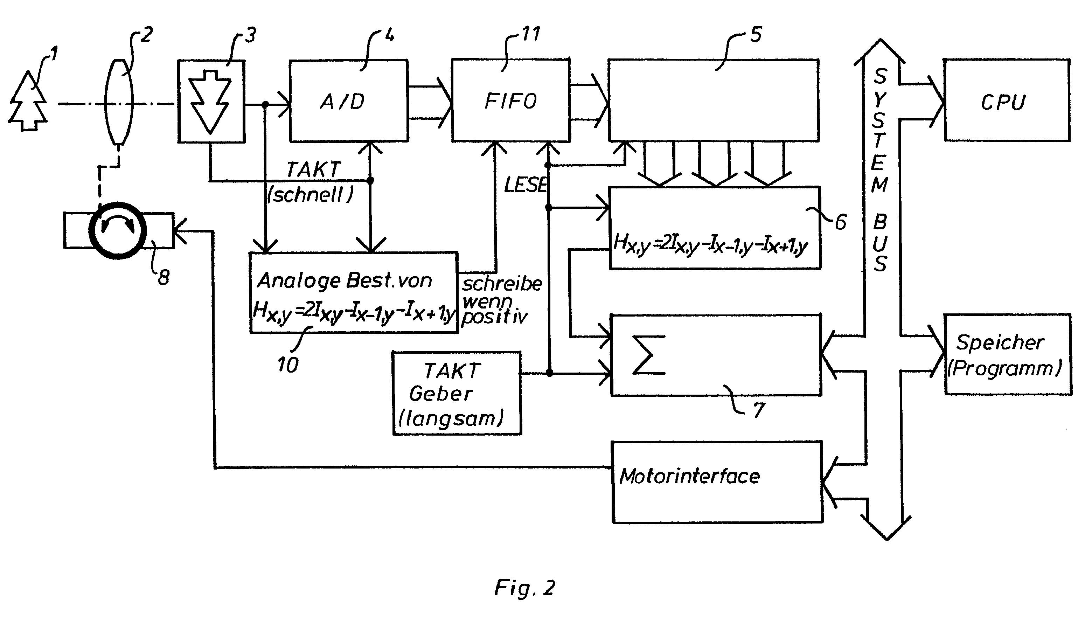

Fig. 2 zeigt ein solches Autofokussystem. Die vom Sensor 3 kommenden Bilddaten werden einerseits im A/D-Wandler 4 digitalisiert und andererseits in einer Einheit 10 daraufhin überprüft, ob sie einen Beitrag zur Summe liefern. Ist dies der Fall, werden sie und die Daten der Nachbarpunkte in einen schnellen Zwischenspeicher 11 (FIFO) übernommen. Aus diesem liest die Bewertungselektronik die Daten aus. Der Rest des Autofokussystems entspricht dem in Fig. 1.

Der Vorteil der Erfindung besteht darin, daß die Bilddaten des Sensors fast doppelt so schnell ausgelesen und vorverarbeitet werden können, als wie die Bewertungselektronik arbeiten kann, da statistisch gesehen nur etwa die Hälfte der Daten in das FIFO übernommen werden müssen. Bei ähnlich guten Bewertungseigenschaften für die Detektion des Optimalfokus ist der Geschwindigkeitsgewinn erheblich.

Um zu noch schnelleren Einstellergebnissen zu kommen, kann man den in Frage kommenden Bereich zweimal durchfahren, nämlich einmal in weiten Schritten für eine Grobfokussierung und ein zweites Mal, um den dann in Frage kommenden engeren Bereich für die Feineinstellung abzutasten. Im allgemeinen ist jedoch ein zweimaliges Durchfahren nicht notwendig, wenn nur die Verstellschritte klein genug sind, was von den optischen Bedingungen, der Schärfentiefe und dem Präparat abhängt.

Die Fokussierung kann sowohl durch Einstellung der Optik als auch durch Variieren der Gegenstandsweite bei fester Bildweite erfolgen. Letzteres stellt den Anwendungsfall im Lichtmikroskop dar.

Um die Intensitätsdifferenzen zwischen benachbarten Bildpunkten zu ermitteln, kann man in der Bildebene einen Sensor anordnen, der die Helligkeitsdifferenzen eines Bildpunktes zu seinen beiden Nachbarpunkten in einer Zeile ermittelt. Dieser Sensor ist dann zur Summenbildung in den beiden Koordinatenrichtungen der Bildebene von Bildpunkt zu Bildpunkt zu verschieben.

Der Radius des Airy-Scheibchens, das ist der räumliche Abstand von benachbarten Bildpunkten, bei denen Intensitätsunterschiede noch erfaßbar sind, muß hierbei dem Pixelabstand, das ist der räumliche Abstand der von einem Sensor noch einzeln erfaßbaren Bildpunkte, entsprechen oder größer als dieser sein.

Eine derartige Autofokussierung ist jedoch zu zeitaufwendig.

Zu einem schnelleren Ergebnis kommt man, wenn man einen Sensor vorsieht, welcher die Helligkeitsdifferenzen der Bildpunkte der Zeile zu ihren Nachbarpunkten in der Zeile über die Zeilenlänge des Objektbildes gleichzeitig erfaßt, und wenn man diese Zeile zur Summenbildung senkrecht zur Zeilenrichtung schrittweise verschiebt.

Zu einem noch schnelleren Ergebnis kommt man, wenn man von vornherein einen Sensor verwendet, der flächenförmig verteilt eine Vielzahl von lichtempfindlichen Elementen aufweist, welche gleichzeitig die Helligkeitsdifferenzen jedes Bildpunktes zu seinen Nachbarpunkten erfassen. Hierbei genügt es, wenn auch dieser Sensor die Helligkeitsdifferenzen der Bildpunkte zeilenmäßig erfaßt.

Für spezielle Meßaufgaben kann der Sensor an das jeweilige Objekt angepaßt werden. Das kann sowohl durch die Form der Anordnung der lichtempfindlichen Elemente als auch durch deren Abstand voneinander, der nicht äquidistant sein muß, erreicht werden (Korrelationsmaske). Dies ist besonders für Testobjekte sinnvoll.

Kreuzförmig angeordnete Zeilensensoren eignen sich zum Beispiel für Scheitelbrechwertbestimmungen.

Bei der Verwendung einer Hardware zur Berechnung der Summe ist es sogar möglich, ohne Vorverarbeitung bis zu 60 abgetastete Bilder pro Sekunde auszuwerten.

## Patentansprüche

1. Verfahren zur Fokussierung eines optischen Abbildungssystems, bei dem wenigstens für einen Teil der Bildpunkte des Objektes die Helligkeitsdifferenzen zwischen jedem dieser Punkte und seinen beiden Nachbarpunkten ermittelt werden, und die Helligkeitsdifferenzen der Punkte für jede Fokussierstelle summiert werden, und bei dem aus den Summen die Fokussierstellung ausgewählt wird, bei der die Summe ein Maximum aufweist, dadurch gekennzeichnet, daß die ermittelten Helligkeitsdifferenzen nur für die Bildpunkte summiert werden, welche positive Beiträge liefern.

2. Verfahren nach Anspruch 1, dadurch gekennzeichnet, daß zur Ermittlung des Maximums der Summen der Fokussierbereich als Abstand des Objektes vom Objektiv in engen Schritten durchfahren wird.

3. Verfahren nach Anspruch 1, dadurch gekennzeichnet, daß für die Wertung der Helligkeitsdifferenzen der Bildpunkte auf ihre Brauchbarkeit zur Summenbildung hin eine Vorverarbeitung der Helligkeitsdifferenzen durchgeführt wird, derart, daß die zu bewertenden Bildpunkte danach vorselektiert werden, ob sie einen Beitrag zur Summe der Helligkeitsdifferenzen leisten werden oder nicht.

4. Verfahren nach Anspruch 1, dadurch gekennzeichnet, daß die ermittelten Summenwerte in Abhängigkeit von den Abstandswerten zwischen Objekt und Objektiv gespeichert werden, und anschließend das Objekt auf denjenigen Abstand vom Objektiv gefahren wird, der dem Maximum der Summe der Helligkeitsdifferenzen entspricht.

5. Verfahren nach Anspruch 1, dadurch gekennzeichnet, daß die Bildweite variiert wird.

6. Verfahren nach Anspruch 1, dadurch gekennzeichnet, daß nur der Bereich der Fokusbreite (Schärfenzone des Objektes) zur Ermittlung des Maximums in engen Schritten durchfahren wird.

7. Verfahren nach Anspruch 1, dadurch gekennzeichnet, daß der in Frage kommende Abstandsbereich zum Zwecke einer Vorfokussierung durchfahren wird, daß aus den ermittelten Summenwerten der in Frage kommende Bereich für die Ermittlung des Maximums der Summe der Lichtintensitätsdifferenzen ermittelt wird und anschließend dieser Bereich ein zweites Mal zur Feinfokussierung durchfahren wird.

8. Verfahren nach Anspruch 1, dadurch gekennzeichnet, daß der gesamte Bildbereich des Objektes ausgewertet wird.

9. Verfahren nach Anspruch 1, dadurch gekennzeichnet, daß nur der scharf einzustellende Ausschnitt des Bildes des Objektes in einem oder mehreren Bildbereichen ausgewertet wird.

10. Einrichtung zur Durchführung des Verfahrens nach Anspruch 1, dadurch gekennzeichnet, daß in der Bildebene ein an die Meßaufgabe angepaßter ein- und zweidimensionaler Sensor (3) vorgesehen ist, der die Helligkeitsdifferenzen zwischen den Bildpunkten erfaßt, und daß Mittel (6, 7) vorgesehen sind, die die Helligkeitsdifferenzen nur für die Bildpunkte summieren, welche positive Beiträge liefern.

11. Einrichtung nach Anspruch 10, dadurch gekennzeichnet, daß der kleinste auflösbare Abstand des Sensors kleiner oder gleich dem Radius des Airy-Scheibchens ist.

12. Einrichtung nach Anspruch 10, dadurch gekennzeichnet, daß der Sensor (3) aus einzelnen lichtempfindlichen Elementen besteht.

13. Einrichtung nach Anspruch 11, dadurch gekennzeichnet, daß die lichtempfindlichen Elemente in äquidistantem Abstand voneinander angeordnet sind.

14. Einrichtung nach Anspruch 12, dadurch gekennzeichnet, daß die lichtempfindlichen Elemente in nichtäquidistantem Abstand voneinander angeordnet sind.

15. Einrichtung nach Anspruch 10, dadurch gekennzeichnet, daß dem Sensor (3) eine Korrelationsmaske zugeordnet ist.

## Claims

1. Process for focusing an optical image-forming system with which, at least for a part of the image points of the object, the differences in brightness between each of these points and its two neighbouring points are established, and the differences in brightness of the points for each focusing position are summated, and with which, from the sums, there is selected the focusing position at which the sum presents a maximum, characterised in that the established differences in brightness are summated only for those image points which supply positive values.

2. Process according to claim 1, characterised in that, for determining the maximum of the sums, the focusing range is traversed in narrow steps as a distance of the object from the objective.

3. Process according to claim 1, characterised in that, for the evaluation of the differences in brightness of the image points regarding their utility for the sum formation, a preliminary processing of the brightness differences is carried out in such manner that the image points to be evaluated are preselected as to whether or not they provide a contribution to the sum of the brightness differences.

4. Process according to claim 1, characterised in that the established summation values are stored in dependence on the distance values between object and objective, and thereafter the object is moved to that distance from the objective which corresponds to the maximum of the sum of the differences in brightness.

5. Process according to claim 1, characterised in that the depth of focus is varied.

6. Process according to claim 1, characterised in that only the range of the depth of focus (sharpness zone of the object) is traversed in narrow stages for determining the maximum.

7. Process according to claim 1, characterised in that the distance or spacing range in question is traversed for the purpose of a pre-focusing, that the range involved for establishing the maximum of the sum of the differences in light intensity is determined from th established summation values and thereafter this range is traversed a second time for the fine focusing.

8. Process according to claim 1, characterised in that the entire image range of the object is evaluated.

9. Process according to claim 1, characterised in that only that part of the image of the object which is to be sharply focussed is evaluated in one or more image zones.

10. Means for carrying out the process according to claim 1, characterised in that a single- or two-dimensional sensor (3) adapted to the measurement problem is provided in the image plane, which sensor determines the differences in brightness between the image points, and that means (6, 7) are provided which summate the differences in brightness only for the image points which supply positive values.

11. Means according to claim 10, characterised in that the smallest solvable spacing of the sensor is smaller than or equal to the radius of the Airy disc.

12. Means according to claim 10, characterised in that the sensor consists of separate light-sensitive elements.

13. Means according to claim 11, characterised in that the light-sensitive elements are arranged at an equidistant spacing from one another.

14. Means according to claim 12, characterised in that the light-sensitive elements are arranged at a non-equidistant spacing from one another.

15. Means according to claim 10, characterised in that a correlation mask is associated with the sensor (3).

## Revendications

1. Procédé pour la focalisation d'un système optique de reproduction, dans lequel on détermine, au moins pour une partie des points d'image de l'objet, les différences de luminance entre chacun de ces points et ses deux points voisins et on fait la somme des différences de luminance des points pour chaque position de focalisation, et dans lequel on choisit à partir des sommes la position de focalisation pour laquelle la somme présente un maximum, caractérisé en ce qu'on ne fait la somme des différences de luminance déterminées que pour les points d'image fournissant des valeurs contributives positives.

2. Procédé selon la revendication 1, caractérisé en ce que pour déterminer le maximum des sommes, on parcourt par pas étroits le domaine de focalisation correspondant à la distance de l'objet à l'objectif.

3. Procédé selon la revendication 1, caractérisé en ce que pour juger les différences de luminance des points d'image en ce qui concerne leur utilisation pour la formation de la somme, on effectue un traitement préalable des différences de luminance, de manière que les points image à évaluer sont alors présélectionnés suivant qu'ils fourniront une valeur contributive à la somme des différences de luminance ou non.

4. Procédé selon la revendication 1, caractérisé en ce que les valeurs de sommes déterminées en fonction des valeurs de la distance entre l'objet et l'objectif sont mises en mémoire, l'objet étant ensuite déplacé à la distance de l'objectif correspondant au maximum de la somme des différences de luminance.

5. Procédé selon la revendication 1, caractérisé en ce qu'on fait varier la distance de l'image.

6. Procédé selon la revendication 1, caractérisé en ce qu'on ne parcourt par pas étroits que le domaine focal (zone de mise au point de l'objet) pour déterminer le maximum.

7. Procédé selon la revendication 1, caractérisé en ce qu'on parcourt le domaine des distances envisagées dans le but d'un focalisation préalable, en ce qu'on détermine, à partir des valeurs de sommes obtenues, le domaine à considérer pour déterminer le maximum de la somme des différences d'intensités lumineuse et en ce qu'on parcourt ensuite ce domaine une deuxième fois pour la focalisation fine.

8. Procédé selon la revendication 1, caractérisé en ce qu'on évalue la totalité du domaine d'image de l'objet.

9. Procédé selon la revendication 1, caractérisé en ce qu'on n'évalue que la partie de l'image de l'objet à mettre au point finement, dans une ou plusieurs zones d'image.

10. Dispositif pour la mise en pratique du procédé selon la revendication 1, caractérisé en ce qu'il est prévu dans le plan d'image un capteur (3) à une ou deux dimensions adapté au problème de mesure, ce capteur déterminant les différences de luminance entre les points d'image, et en ce qu'il est prévu des moyens (6, 7) qui font la somme des différences de luminance seulement pour les points d'image qui fournissent des valeurs contributives positives.

11. Dispositif selon la revendication 10, caractérisé en ce que la plus faible distance de résolution du capteur est inférieure ou égale au rayon de la tache d'Airy.

12. Dispositif selon la revendication 10, caractérisé en ce que le capteur est constitué d'éléments sensibles à la lumière individuels.

13. Dispositif selon la revendication 11, caractérisé en ce que les éléments sensibles à la lumière sont disposés à des distances égales entre eux.

14. Dispositif selon la revendication 12, caractérisé en ce que les éléments sensibles à la lumière sont disposés à des distances inégales entre eux.

15. Dispositif selon la revendication 10, caractérisé en ce qu'un masque de corrélation est associé au capteur (3).

Fig. 1

Fig. 2

EP 0 238 699 B1